(19) Europäisches Patentamt
European Patent Office
Office européen des brevets

(11) **EP 3 163 463 A1**

(12) **EUROPEAN PATENT APPLICATION**

(43) Date of publication:
**03.05.2017 Bulletin 2017/18**

(51) Int Cl.:
***G06F 17/18*** *(2006.01)*

(21) Application number: **15191429.8**

(22) Date of filing: **26.10.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Aphilion BVBA
1000 Brussel (BE)**

(72) Inventor: **Holvoet, Jan
9051 Afsnee (BE)**

(74) Representative: **Plas, Axel Ivo Michel
IP HILLS NV
Hubert Frère-Orbanlaan 329
9000 Gent (BE)**

(54) **A CORRELATION ESTIMATING DEVICE AND THE RELATED METHOD**

(57) A correlation estimating device (100) comprising:
- a first receiving interface (101) receiving a first data series (201);
- a second receiving interface (102) receiving a second data series (202);
- a ratio determining unit (103) determining a primary ratio (301) and a secondary ratio (302) comprising dividing said second data series (202) by said first data series (201) and said first data series (201) by said second data series (202);
- a median calculating engine (104) determining median factors (401:402) for said primary ratio (301) and for said secondary ratio (302);
- a correlation coefficient determining engine (105) determining:
o a product of medians (500) comprising multiplying said median factors (401:402); and
o said correlation coefficient (1) comprising determining the square root of said product of medians (500); and

- an output interface (106) outputting said correlation coefficient (1).

Fig. 1

**Description**

**Field of the Invention**

The present invention generally relates to the field of statistics, and more particularly, to the statistical analysis of relationships or correlations among data series.

**Background of the Invention**

A correlation coefficient is a coefficient that quantifies some type of correlation and dependence, meaning statistical relationships between two or more random variables or observed data samples. A correlation coefficient between two data series X and Y is classically defined as:

$$\rho_{X,Y} = \frac{E[(X - \mu_X)(Y - \mu_Y)]}{\sigma_X \sigma_Y} \qquad (1)$$

where $\mu_X$ and $\sigma_X$ are respectively the expected value and the standard deviation of the data series X, where $\mu_Y$ and $\sigma_Y$ are respectively the expected value and the standard deviation of the data series Y, and where E represents the expectation of the data series X and Y. In the particular case where the data series X and Y are standardized data series, i.e. when the expected values of the data series X and Y are equal to 0 and when the standard deviation of the data series X and Y are equal to 1, equation (1) can be reduced to:

$$\rho_{X,Y} = E[XY] \qquad (2)$$

For standardized data series X and Y, the correlation coefficient between the data series X and Y is therefore the expected value of the data series corresponding to the product of the data series X and Y. The expected value of a data series is usually estimated as the arithmetic mean of the data series. For example, starting from equation (2), Pearson's product-moment correlation coefficient can be written as:

$$r_{XY} = \frac{\sum_n x_i y_i}{n} \qquad (3)$$

where n is the size of the data series XY and where $x_i$ and $y_i$ are the values of X and Y for the $i^{th}$ sample of the data series XY.

A correlation coefficient between two data series X and Y is ideally calculated from good samples that represent the joint distribution of X and Y. Due to the existence of outliers, i.e. of observations that lie outside the overall pattern of a distribution, the correlation coefficient estimated by a classical method such as Pearson's is often incorrect. Indeed, the estimated correlation coefficient is very sensitive to the presence of gross errors in the data as the presence of even only a few outliers in data series can for example completely destroy the correlation coefficient determined from classical methods up to a change of its sign. To prevent outliers from biasing the correlation coefficient, manually pre-processing the data series is therefore necessary prior to the determination of the correlation coefficient to identify and remove such outliers from the data series. This subjective and arbitrary selection makes the estimation of the correlation between the two data series complex, time-consuming and highly unreliable.

Spearman's rank correlation coefficient is an example of a correlation coefficient which is defined to be robust against the presence of outliers in the data series. Spearman's rank correlation coefficient assesses the correlation between two data series using the ranking of data samples of the data series in the data series instead of the actual numerical value of the data samples. This way, outliers carry less weight and therefore do not prevail in the determination of a correlation coefficient. Another robust estimator of the correlation coefficient against the presence of outliers is the Minimum Covariance Determinant, also referred to as MCD estimator.

The determination of robust correlation coefficients derived from Spearman's method or from the MCD estimator is highly time-consuming. Indeed, the estimation of the MCD comprises performing an iterative process on each data series, leaving out some measurements in order to obtain a covariant matrix with the smallest determinant. The covariant matrix is then used as estimator of the covariant matrix of the whole data series. Additionally, this limits the accuracy obtainable with the MCD estimator.

WO2007/064860 discloses an alternative method for calculating a robust correlation coefficient against outliers.

A weight is assigned to each data sample of the data series, indicating the likelihood that that data sample is an outlier. Each weight is proportional to the inverse of a distance between the data sample and a sample mean. In other words, if the data sample obeys the joint distribution of the data series, that data sample is given a high weight; otherwise, it is given a low weight. The correlation coefficient between the data series is then estimated taking the weights of the data samples into account.

The method disclosed in WO2007/064860 is complex. The attribution of weights to each data sample of the data series is highly time-consuming and jeopardizes the efficiency of the method. As for Pearson's product-moment correlation, the method disclosed in WO2007/064860 relies on the calculation of a sample mean, which limits the insensitivity of the correlation coefficient to the presence of outliers and therefore makes its estimation unreliable.

In the context of statistics, a correlation coefficient may illustrate the correlation between the presence of one or more external factors and the behaviour of one or more systems submitted to these external factors. A correlation coefficient may be useful for example in the domain of machine condition monitoring to prevent damage of the machine, in the medical domain where data from medical sensors and/or medical data about one or more patients are analysed, etc. A large number of outliers are present in financial market places. In the context of management of collective investment funds, the estimation of a correlation coefficient, reliable and robust against the presence of outliers, is therefore mandatory to ensure an efficient selection of shares and stocks. A time-consuming method as listed above implies that the compilation of newly published financial results and of their interpretation by financial analysts require a few hours, or even a few days, thereby considerably delaying resulting adequate financial decisions.

It is an objective of the present invention to disclose a device that overcomes the above identified shortcomings of existing solutions. More particularly, it is an objective to disclose a device that yields a fast, robust and efficient determination of the relationships or correlations among data series.

## Summary of the Invention

According to a first aspect of the present invention, the above defined objectives are realized by a correlation estimating device for determining a correlation coefficient between data series, the correlation estimating device comprising:

- a first receiving interface, adapted to receive a first data series;
- a second receiving interface, adapted to receive a second data series;
- a ratio determining unit, operationally coupled to the first receiving interface and to the second receiving interface, configured to determine:

    ◦ a primary ratio comprising dividing the second data series by the first data series; and
    ◦ a secondary ratio comprising dividing the first data series by the second data series;

- a median calculating engine, operationally coupled to the ratio determining unit, configured to determine:

    ◦ a primary median factor for the primary ratio; and
    ◦ a secondary median factor for the secondary ratio;

- a correlation coefficient determining engine, operationally coupled to the median calculating engine, configured to determine:

    ◦ a product of medians comprising multiplying the primary median factor with the secondary median factor; and
    ◦ the correlation coefficient between the first data series and the second data series comprising determining the square root of the product of medians; and

- an output interface, adapted to output the correlation coefficient.

In accordance with the present invention, the correlation estimating device determines a correlation coefficient between a first data series and a second data series in a fast and efficient manner, and ensures the outputted correlation coefficient is robust in presence and in absence of outliers in the first data series and/or the second data series. Indeed, the determination of a correlation coefficient relies on the determination of a first median factor and a second median factor. A determination comprising the use of median factors instead of mean factors ensures the correlation coefficient determined by the correlation estimating device is robust when outliers are present in the data series, and also ensures the correlation coefficient determined by the correlation estimating device is reliable when outliers are not present in the data series. A determination comprising the use of a median further guarantees the correlation estimating device performs a simple determination of a correlation coefficient, thereby greatly reducing the complexity of the determination. This reduces the costs associated with the implementation of the correlation estimating device and with its operation. Additionally, in the context of the management of investment funds for example, the correlation estimating device allows to compile newly published financial results and their interpretation by financial analysts in a fast and efficient manner. The correlation estimating device according to the present invention indeed determines a correlation coefficient with a speed that is 135 times higher than the speed at which a correlation coefficient is determined with the MCD estimator and is therefore scalable to large sets of data. For example, the correlation estimating device according to the present invention can perform 8,000,000 correlations with a calculation time of about 40 minutes. This allows the determination of a correlation coefficient in real-time, i.e. as soon as data samples of data series are made available. This greatly reduces the time needed to analyse the correlation among data series, and thereby allows to quantify the impact and react to new publications much faster than what can be achieved with existing methods and systems available in the prior art.

According to the present invention, the correlation estimating device comprises a first receiving interface and a second receiving interface. Alternatively, the second receiving interface corresponds to the first receiving interface. The median calculating engine determines a primary median factor for the primary ratio and a secondary median factor for the secondary ratio. In other words, the median calculating engine determines the median of the primary ratio and the median of the secondary ratio.

In accordance with the present invention, the first receiving interface receives a first data series, referred to as data series X, and the second receiving interface received a second data series, referred to as data series Y. When performing a linear regression of the second data series on the first data series, a factor $\beta$ is determined by:

$$Y = \beta X \tag{4}$$

The best estimation of the factor $\beta$ is:

$$\beta = \frac{cov_{XY}}{\sigma_X^2} \tag{5}$$

where $cov_{XY}$ is the covariance between the first data series and the second data series and where $\sigma_X^2$ is the standard deviation of the first data series. Per definition, the correlation coefficient between the first data series and the second data series is equal to:

$$\rho_{XY} = \frac{cov_{XY}}{\sigma_X \sigma_Y} \tag{6}$$

Equation (4) can now be reduced to:

$$Y = \rho_{XY} * \frac{\sigma_Y}{\sigma_X} X \tag{7}$$

and equation (7) can be rearranged as:

$$\frac{Y}{X} = \rho_{XY} * \frac{\sigma_Y}{\sigma_X} \tag{8}$$

In accordance with the present invention, the ratio determining unit determines a primary ratio by dividing the second data series by the first data series, and further determines a secondary ratio by dividing the first data series by the second data series. According to the present invention, the median calculating engine determines a primary median factor of the resulting data series $\frac{Y}{X}$ as an estimator of $\rho_{XY} * \frac{\sigma_Y}{\sigma_X}$. Similarly, the median calculating engine determines a secondary median factor of the resulting data series $\frac{X}{Y}$ as an estimator of $\rho_{XY} * \frac{\sigma_X}{\sigma_Y}$. The correlation coefficient determining engine determines a product of the primary median factor and of the secondary median factor, thereby obtaining equation (9) and then equation (10):

$$med\left(\frac{Y}{X}\right) * med\left(\frac{X}{Y}\right) = \rho_{XY} * \frac{\sigma_Y}{\sigma_X} * \rho_{XY} * \frac{\sigma_X}{\sigma_Y} \tag{9}$$

$$med\left(\frac{Y}{X}\right) * med\left(\frac{X}{Y}\right) = \rho_{XY}^2 \tag{10}$$

The correlation coefficient determining engine then determines the correlation coefficient $\rho_{XY}$ by determining the square root of equation (10) and obtaining the correlation coefficient of equation (11) that the output interface of the correlation estimating device outputs:

$$\left| \sqrt{med\left(\frac{Y}{X}\right) * med\left(\frac{X}{Y}\right)} \right| \tag{11}$$

According to an optional embodiment, the correlation estimating device further comprises an expected value determining unit adapted to determine an expected value of the first data series and/or of the second data series.

According to an optional embodiment, the correlation estimating device further comprises a standard deviation determining unit adapted to determine a standard deviation for the first data series and/or for the second data series.

According to an optional embodiment, the correlation estimating device further comprises a standardizing module, adapted to standardize the first data series and the second data series.

The standardizing module of the correlation estimating device is operationally coupled to the expected value determining unit and the standard deviation determining unit of the correlation estimating device. This way, the standardizing module sets the expected value of the first data series and of the second data series determined by the expected value determining unit to 0, and sets the standard deviation of the first data series and of the second data series determined by the standard deviation determining unit to 1, thereby standardizing both the first data series and the second data series. This makes the determination of the correlation coefficient even simpler as the covariance between two standardized data series is equal to the correlation between the two standardized data series.

According to an optional embodiment, the correlation estimating device further comprises:

- a sign identifying unit, operationally coupled to the correlation coefficient determining engine, adapted to detect a primary mathematical sign of the primary median factor and a secondary mathematical sign of the secondary median factor;
- and wherein the correlation coefficient determining engine is further configured to determine the correlation coefficient as equal to 0 when the primary mathematical sign is different from the secondary mathematical sign.

This way, the correlation coefficient determining engine can always determine the square root of equation (10), thereby guaranteeing equation (11) is always valid and correct. This guarantees that a correlation coefficient can always be determined by the correlation estimating device, even if the primary median factor and the secondary median factor differ in sign, i.e. even if the first data series and the second data series are hardly correlated.

According to a second aspect of the present invention, there is provided a computer-implemented method for estimating a correlation coefficient between data series, the method comprising the steps of:

- receiving a first data series;
- receiving a second data series;
- determining a primary ratio comprising dividing the second data series by the first data series;
- determining a secondary ratio comprising dividing the first data series by the second data series;
- determining a primary median factor for the primary ratio;
- determining a secondary median factor for the secondary ratio;
- determining a product of medians comprising multiplying the primary median factor with the secondary median factor;
- determining the correlation coefficient between the first data series and the second data series comprising determining the square root of the product of medians; and

- outputting the correlation coefficient.

In accordance with the present invention, a correlation coefficient between a first data series and a second data series is determined in a fast and efficient manner. The method according to the present invention ensures the outputted correlation coefficient is robust in presence and in absence of outliers in the first data series and/or the second data series. Indeed, the determination of a correlation coefficient relies on the determination of a first median factor and a second median factor. A determination comprising the use of median factors instead of mean factors ensures the correlation coefficient is robust when outliers are present in the data series, and also ensures the correlation coefficient is reliable when outliers are not present in the data series. A determination comprising the use of a median further guarantees the method according to the present invention is simple, thereby greatly reducing the complexity of the determination. This reduces the costs associated with the implementation of the method according to the present invention. Additionally, in the context of the management of investment funds for example, newly published financial results and their interpretation by financial analysts can be compiled in a fast and efficient manner. The method according to the present invention indeed determines a correlation coefficient with a speed that is 135 times higher than the speed at which a correlation coefficient is determined with the MCD estimator and is therefore scalable to large data sets. For example, the method according to the present invention can perform 8,000,000 correlations with a calculation time of about 40 minutes. This allows the determination of a correlation coefficient in real-time, i.e. as soon as data samples of data series are made available. This greatly reduces the time needed to analyse the correlation among data series, and thereby allows to quantify the impact and react to new publications much faster than what can be achieved with existing methods and systems described in the prior art.

The current invention in addition also relates to a computer program comprising software code adapted to perform the computer-implemented method according to the present invention when executed by a computing system.

The invention further relates to a computer readable storage medium comprising the computer program according to the present invention.

## Brief Description of the Drawings

Fig. 1 schematically illustrates an embodiment of the correlation estimating device according to the present invention.

Fig. 2 schematically illustrates the steps of an embodiment of the computer-implemented method according to the present invention.

Fig. 3 is a table summarizing examples of values of correlation coefficients determined from different methods and the time with which the values of the correlation coefficients were obtained.

Fig. 4 schematically illustrates the standard deviation from the value 0.5 of the correlation coefficients calculated with an MCD estimator corresponding to the example illustrated in Fig. 3 and of the correlation coefficients calculated with the correlation estimating device according to the present invention corresponding to the example illustrated in Fig. 3.

Fig. 5 schematically illustrates a suitable computing system for hosting the correlation estimating device of Figure 1.

## Detailed Description of Embodiment(s)

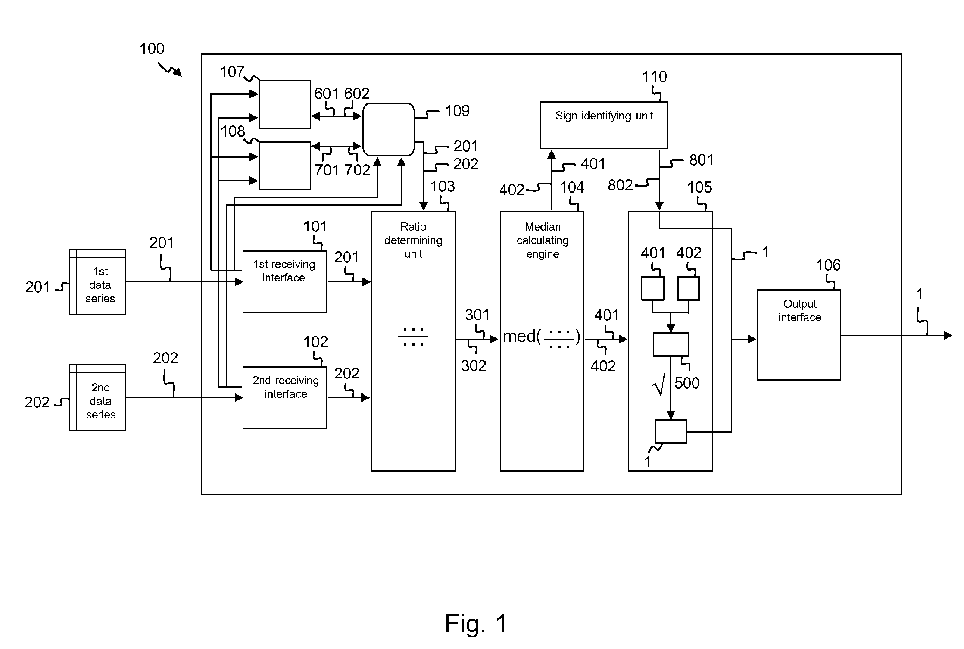

According to an embodiment shown in Fig. 1, a correlation estimating device 100 according to the present invention comprises a first receiving interface 101, a second receiving interface 102, a ratio determining unit 103, a median calculating engine 104, a correlation coefficient determining engine 105 and an output interface 106. The first receiving interface 101 receives a first data series 201. The second receiving interface 102 receives a second data series 202. According to an alternative embodiment, the second receiving interface 102 may correspond to the first receiving interface 101. The ratio determining unit 103 receives the first data series 201 from the first receiving interface 101 and the second data series 202 from the second receiving interface 102. The ratio determining unit 103 then calculates a primary ratio 301 comprising dividing the second data series 202 by the first data series 201. The ratio determining unit 103 also calculates a secondary ratio 302 comprising dividing the first data series 201 by the second data series 202. The median calculating engine 104 receives the primary ratio 301 and the secondary ratio 302 from the ratio determining unit 103. The median calculating engine 104 then determines a primary median factor 401 for the primary ratio 301, and further determines a secondary median factor 402 for the secondary ratio 302. The correlation coefficient determining engine 105 receives the primary median factor 401 and the secondary median factor 402 from the median calculating engine 104. The correlation coefficient determining engine 105 determines a product of medians 500 comprising multiplying the primary median factor 401 with the secondary median factor 402. The correlation coefficient determining engine 105 further determines a correlation coefficient 1 between the first data series 201 and the second data series 202 comprising determining the square root of the product of medians 500. The output interface 106 receives the correlation coefficient 1 and outputs the correlation coefficient 1.

In Fig. 1, the embodiment 100 of the correlation estimating device 100 according to the present invention further comprises an expected value determining unit 107, a standard deviation determining unit 108, and a standardizing module 109. The expected value determining unit 107 receives the first data series 201 and the second data series 202 from respectively the first receiving interface 101 and the second receiving interface 102. The expected value determining unit 107 determines the expected values 601 ;602 of respectively the first data series 201 and the second data series 202. The standard deviation determining unit 108 receives the first data series 201 and the second data series 202 from respectively the first receiving interface 101 and the second receiving interface 102. The standard deviation determining unit 108 determines the standard deviations 701;702 of respectively the first data series 201 and the second data series 202. The standardizing module 109 receives the first data series 201 and the second data series 202 from respectively the first receiving interface 101 and the second receiving interface 102. The standardizing module 109 sets the expected values 601 ;602 of respectively the first data series 201 and the second data series 202 as equal to 0 and sets the standard deviations 701 ;702 of respectively the first data series 201 and the second data series 202 as equal to 1 in order to standardize the first data series 201 and the second data series 202. The ratio determining unit 103 then receives the standardized first data series 201 and the standardized second data series 202 from the standardizing module 110, and further determines a primary ratio 301 comprising dividing the standardized second data series 202 by the standardized first data series 201 and a secondary ratio 302 comprising dividing the standardized first data series 201 by the standardized second data series 202.

In Fig. 1, the embodiment 100 of the correlation estimating device 100 according to the present invention comprises a sign identifying unit 110. The sign identifying unit 110 receives the primary median factor 401 and the secondary median factor 402 from the median calculating engine 104. The sign identifying unit 110 detects a primary mathematical sign 801 of the primary median factor 401 and a secondary mathematical sign 802 of the secondary median factor 402. The correlation coefficient determining engine 105 receives the primary mathematical sign 801 and the secondary mathematical sign 802 from the sign identifying unit 110, and determines the correlation coefficient 1 as equal to 0 when the primary mathematical sign 801 is different from the secondary mathematical sign 802.

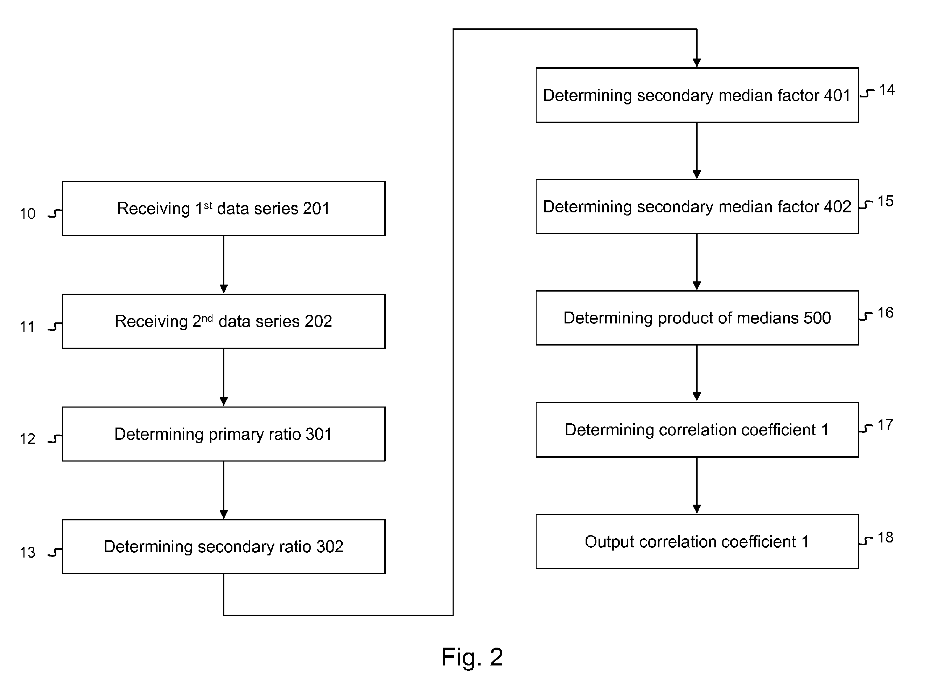

An embodiment of the steps of the method for estimating a correlation coefficient 1 in accordance with the present invention is illustrated in Fig. 2. In step 10, a first data series 201 is received. In step 11, consequent or simultaneous to step 10, a second data series 202 is received. In step 12, consequent to steps 10 and 11, a primary ratio 301 is determined, comprising dividing the second data series 202 by the first data series 201. In step 13, consequent or simultaneous to step 12, a secondary ratio 302 is determined, comprising dividing the first data series 201 by the second data series 202. In step 14, consequent to steps 12 and 13, a primary median factor 401 is determined for the primary ratio 301, comprising determining the median of the primary ratio 301. In step 15, consequent or simultaneous to step 14, a secondary median factor 402 is determined for the secondary ratio 302, comprising determining the median of the secondary ratio 302. In step 16, a product of medians 500 is determined comprising multiplying the primary median factor 401 with the secondary median factor 402. A correlation coefficient 1 between the first data series 201 and the second data series 202 is then determined in step 17 comprising determining the square root of the product of medians 500. In step 18, the correlation coefficient 1 is outputted.

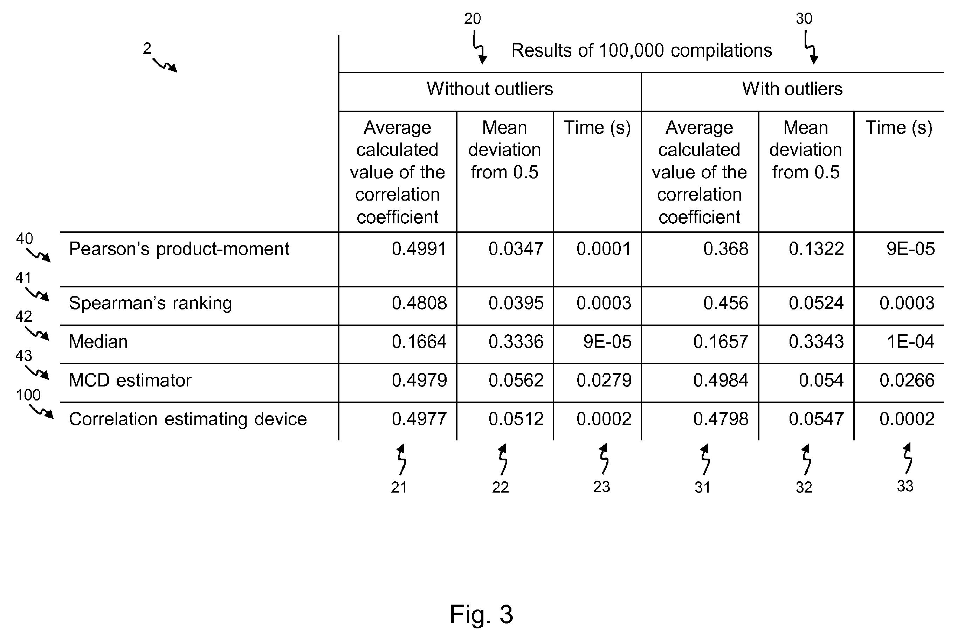

In Fig. 3, examples of values of correlation coefficients determined by different estimating methods/devices and the time, in seconds, with which the correlation coefficients are obtained are compared. Two standardized and normally distributed data series are generated with a predetermined correlation of 0.5. Each data series comprises 300 data values. The two data series are then corrupted with outliers: four data values in each data series are randomly selected and intentionally replaced with an extreme value of 5 or -5. A correlation coefficient between the two data series is then calculated at every iteration according to several methods listed in the state-of-the-art and according to the method in accordance with the present invention. A mean deviation of the obtained correlation coefficients from the predetermined correlation of 0.5 is then listed in columns 22 and 32 of the table 2 depicted in Fig. 3. Table 2 summarizes the results of 100,000 simulations in presence of outliers. In other words, two random data series were 100,000 times generated with a predetermined correlation of 0.5, the data series were each time corrupted according to the corruption above and their correlation coefficient was each time determined. Furthermore, the behaviour of the estimators in absence of outliers is also studied in order to test their reliability. Table 2 also summarizes the results of 100,000 simulations in absence of outliers. In other words, two random data series were 100,000 times generated with a predetermined correlation of 0.5, the two data series were never corrupted and their correlation coefficient was each time determined. Five estimators are compared: Pearson's product-moment 40; Spearman's ranking 41; a combination of Pearson's product-moment 40 with the estimation of the median of the two data series 42 instead of the mean of the data series corresponding to the product of a first data series and a second data series; the MCD estimator 43; and the correlation estimating device 100 according to the present invention. In column 20, the average calculated values 21 of the correlation coefficients are estimated in absence of outliers, and the mean deviation 22 from 0.5 as well as the time 23 with which the values 21 were estimated are determined. In column 30, the average calculated 31 of the correlation coefficients are estimated in presence of outliers, and the mean deviation 32 from 0.5 as well as the time 33 with which the values 31 were estimated are determined.

In presence of outliers in column 30, Pearson's product-moment estimator 40 obviously fails. In column 31, the corruption of the data series with outliers inevitably makes the average value of the correlation coefficients determined with Pearson's product-moment estimator 40 deviate towards 0, and the average estimation of the correlation coefficient with Pearson's product-moment 40 is therefore too low, reaching an average value of 0.368. Spearman's ranking estimator 41, which is supposed to be more robust than Pearson's product-moment 40 in presence of outliers, is indeed more robust, but still partially demonstrates a similar deviation of the correlation towards 0, reaching an average value of 0.456. The estimation of the median 42 completely fails, reaching an average correlation coefficient of 0.1657. The MCD estimator 43 succeeds in estimating a value of the correlation coefficient close to 0.5, reaching an average value of 0.4984. The very good estimation of MCD estimator 43 can be explained by the fact that the method of the MCD estimator 43 excludes some data values of the data series before performing the estimation of the correlation coefficient, for example the extreme data values of the data series which usually correspond to outliers. Finally, the correlation estimating device 100 according to the present invention demonstrates its accuracy, its relevance and its efficiency in presence of outliers in column 30. Indeed, the correlation estimating device 100 determines an average value 31 of the correlation coefficient of 0.4798, which is a much better result than Spearman's ranking estimator 41. Additionally, the correlation estimating device 100 determines an average value 31 of the correlation coefficient of 0.4798 faster than Spearman's ranking estimator 41 determines an average value 31 of the correlation coefficient of 0.4984.

In absence of outliers in column 20, Pearson's product-moment estimator 40 is remarkable in accuracy and speed, estimating an average correlation coefficient in column 21 equal to 0.4991 in 0.0001 seconds. The estimation of the median 42 completely fails, reaching an average correlation coefficient of 0.1664. The MCD estimator 43 and the correlation estimating device 100 according to the present invention demonstrate excellent results in the estimation of the correlation coefficients, delivering respectively an average value 21 of 0.4979 and 0.4977. However, one advantage of the correlation estimating device 100 according to the present invention is that the correlation estimating device 100 demonstrates a lower mean deviation from 0.5 than the MCD estimator 43 does.

The main advantage of the correlation estimating device 100 in absence of outliers in column 20 is the time 23 with which the correlation coefficients are determined. The correlation estimating device 100 according to the present invention indeed determines correlation coefficients with a speed 135 higher than the more robust correlation estimator, i.e. the MCD estimator 43, while still delivering values 21 of the correlation coefficients which are comparable to the ones delivered by the MCD estimator 43. This gain in time 23 allows to determine correlation coefficients in real-time. For example, 8,000,000 correlations are determined in 40 minutes by the correlation estimating device 100 according to the present invention. If these 8,000,000 correlations were to be performed 135 slower, 4 entire days would be necessary to perform the determinations. Additionally, the method according to the present invention is fully adaptable and may be fully implemented in simple architectures and software programs such as Excel, which is impossible with estimators such as the MCD estimator 43.

Combining Pearson's product-moment estimator 40 with a determination of the medians 42 instead of determining the mean values of the data series corresponding to the product of a first data series and a second data series does not deliver any relevant results, as visible in line 42 of table 2 of Fig. 3. In presence of outliers in column 30, this combined estimator of the median 42 completely fails, reaching an average correlation coefficient of 0.1657. In absence of outliers in column 20, this combined estimator of the median 42 completely fails, reaching an average correlation coefficient of 0.1664.

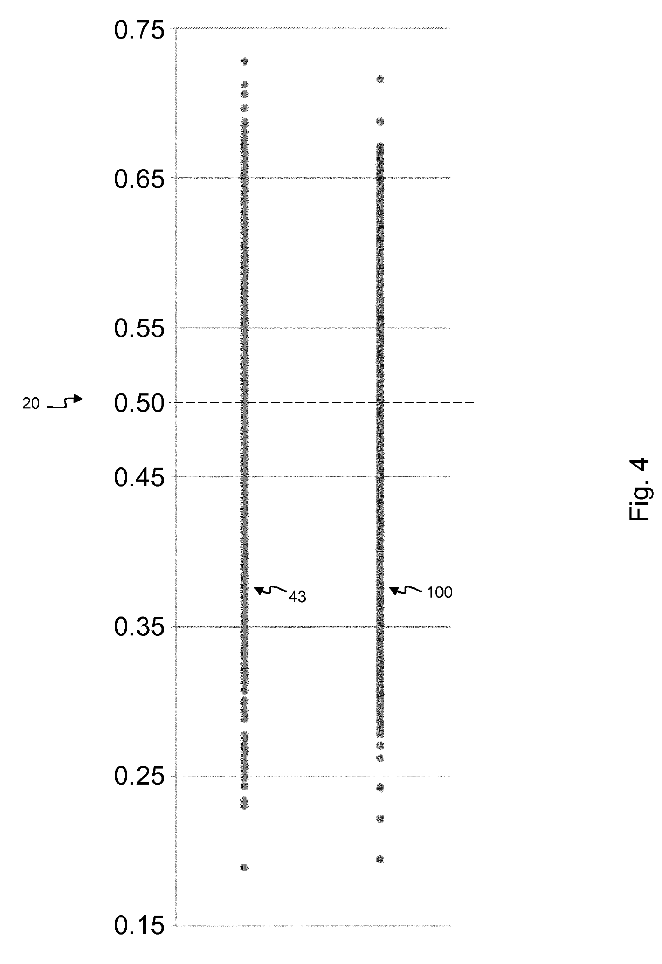

The results of the 100,000 simulations summarized in Fig. 3 are plotted in Fig. 4 for two correlation coefficient estimators. In absence of outliers in column 20 of the table of Fig. 3, the results of the 100,000 determinations of the correlation coefficients estimated by the MCD estimator 43 and the correlation estimating device 100 are plotted. The results of the MCD estimation 43 demonstrate more extreme deviations from 0.5 than the results of the correlation estimating device 100 do, which highlights the advantageous accuracy and reliability of the correlation estimating device 100 according to the present invention.

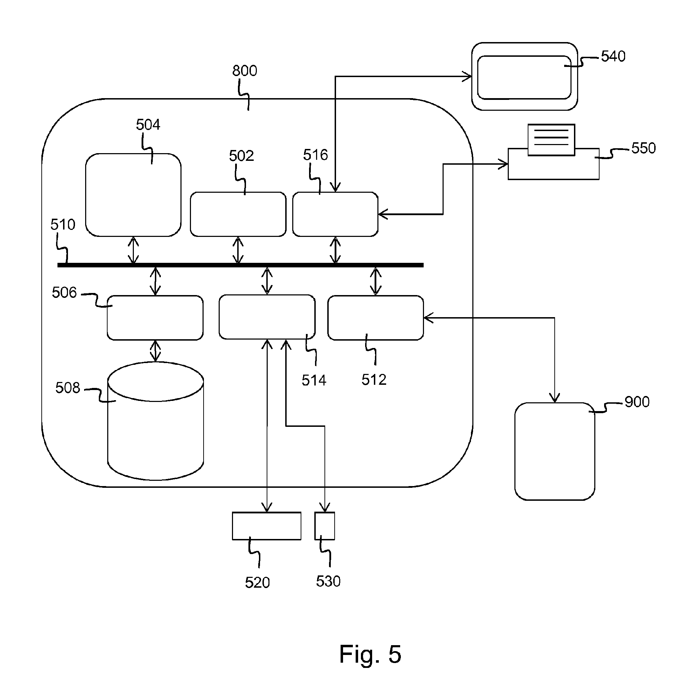

Fig. 5 shows a suitable computing system 800 for hosting the correlation estimating device 100 of Fig. 1. Computing system 800 may in general be formed as a suitable general purpose computer and comprise a bus 510, a processor 502, a local memory 504, one or more optional input interfaces 514, one or more optional output interfaces 516 a communication interface 512, a storage element interface 506 and one or more storage elements 508. Bus 510 may comprise one or more conductors that permit communication among the components of the computing system. Processor 502 may include any type of conventional processor or microprocessor that interprets and executes programming instructions. Local memory 504 may include a random access memory (RAM) or another type of dynamic storage device that stores information and instructions for execution by processor 502 and/or a read only memory (ROM) or another type of static storage device that stores static information and instructions for use by processor 504. Input interface 514 may comprise one or more conventional mechanisms that permit an operator to input information to the computing device 800, such as a keyboard 520, a mouse 530, a pen, voice recognition and/or biometric mechanisms, etc. Output interface 516 may comprise one or more conventional mechanisms that output information to the operator, such as a display 540, a printer 550, a speaker, etc. Communication interface 512 may comprise any transceiver-like mechanism such as for example two 1Gb Ethernet interfaces that enables computing system 800 to communicate with other devices and/or systems, for example mechanisms for communicating with one or more other computing systems 900. The communication interface 512 of computing system 800 may be connected to such another computing system by means of a local area network (LAN) or a wide area network (WAN, such as for example the internet, in which case the other computing system 580 may for example comprise a suitable web server. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example 1TB SATA disk drives, and control the reading and writing of data to and/or from these storage elements 508. Although the storage elements 508 above is described as a local disk, in general any other suitable computer-readable media such as a removable magnetic disk, optical storage media such as a CD or DVD, -ROM disk, solid state drives, flash memory cards, ... could be used. The system 800 described above can also run as a Virtual Machine above the physical hardware.

The correlation estimating device 100 of Fig. 1 can be implemented as programming instructions stored in local memory 504 of the computing system 800 for execution by its processor 502. Alternatively the correlation estimating device 100 of Fig. 1 could be stored on the storage element 508 or be accessible from another computing system 900 through the communication interface 512.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A correlation estimating device (100) for determining a correlation coefficient (1) between data series (201;202), said correlation estimating device (100) comprising:

    - a first receiving interface (101), adapted to receive a first data series (201);
    - a second receiving interface (102), adapted to receive a second data series (202);
    - a ratio determining unit (103), operationally coupled to said first receiving interface (101) and to said second receiving interface (102), configured to determine:

        o a primary ratio (301) comprising dividing said second data series (202) by said first data series (201); and
        o a secondary ratio (302) comprising dividing said first data series (201) by said second data series (202);

    - a median calculating engine (104), operationally coupled to said ratio determining unit (103), configured to determine:

o a primary median factor (401) for said primary ratio (301); and
o a secondary median factor (402) for said secondary ratio (302);

- a correlation coefficient determining engine (105), operationally coupled to said median calculating engine (104), configured to determine:

o a product of medians (500) comprising multiplying said primary median factor (401) with said secondary median factor (402); and
o said correlation coefficient (1) between said first data series (201) and said second data series (202) comprising determining the square root of said product of medians (500); and

- an output interface (106), adapted to output said correlation coefficient (1).

2. A correlation estimating device (100) according to claim 1, wherein said correlation estimating device (100) further comprises an expected value determining unit (107) adapted to determine an expected value (601 ;602) of said first data series (201) and/or of said second data series (202).

3. A correlation estimating device (100) according to claim 1, wherein said correlation estimating device (100) further comprises a standard deviation determining unit (108) adapted to determine a standard deviation (701;702) for said first data series (201) and/or for said second data series (202).

4. A correlation estimating device (100) according to claims 2 and 3, wherein said correlation estimating device (100) further comprises a standardizing module (109), adapted to standardize said first data series (201) and said second data series (202).

5. A correlation estimating device (100) according to any of the preceding claims, wherein said correlation estimating device (100) further comprises:

- a sign identifying unit (110), operationally coupled to said correlation coefficient determining engine (105), adapted to detect a primary mathematical sign (801) of said primary median factor (401) and a secondary mathematical sign (802) of said secondary median factor (402);

and wherein said correlation coefficient determining engine (105) is further configured to determine said correlation coefficient (1) as equal to 0 when said primary mathematical sign (801) is different from said secondary mathematical sign (802).

6. A computer-implemented method for estimating a correlation coefficient (1) between data series (201;202), said method comprising the steps of:

- receiving a first data series (201);
- receiving a second data series (202);
- determining a primary ratio (301) comprising dividing said second data series (202) by said first data series (201);
- determining a secondary ratio (302) comprising dividing said first data series (201) by said second data series (202);
- determining a primary median factor (401) for said primary ratio (301);
- determining a secondary median factor (402) for said secondary ratio (302);
- determining a product of medians (500) comprising multiplying said primary median factor (401) with said secondary median factor (402);
- determining said correlation coefficient (1) between said first data series (201) and said second data series (202) comprising determining the square root of said product of medians (500); and
- outputting said correlation coefficient (1).

7. A computer program comprising software code adapted to perform the computer-implemented method according to claim 6 when executed by a computing system.

8. A computer readable storage medium comprising computer-executable instructions which, when executed by a computing system, perform the computer-implemented method according to claim 6.

Fig. 1

```
┌─────────────────────────────────┐
│   Receiving 1ˢᵗ data series 201  │ 10
└─────────────────────────────────┘
                 │
                 ▼
┌─────────────────────────────────┐
│   Receiving 2ⁿᵈ data series 202  │ 11
└─────────────────────────────────┘
                 │
                 ▼
┌─────────────────────────────────┐
│   Determining primary ratio 301  │ 12
└─────────────────────────────────┘
                 │
                 ▼
┌─────────────────────────────────┐
│  Determining secondary ratio 302 │ 13
└─────────────────────────────────┘
```

```
┌──────────────────────────────────────┐
│ Determining secondary median factor 401│ 14
└──────────────────────────────────────┘
                 │
                 ▼
┌──────────────────────────────────────┐
│ Determining secondary median factor 402│ 15
└──────────────────────────────────────┘
                 │
                 ▼
┌──────────────────────────────────────┐
│   Determining product of medians 500   │ 16
└──────────────────────────────────────┘
                 │
                 ▼
┌──────────────────────────────────────┐
│   Determining correlation coefficient 1│ 17
└──────────────────────────────────────┘
                 │
                 ▼
┌──────────────────────────────────────┐
│     Output correlation coefficient 1   │ 18
└──────────────────────────────────────┘
```

Fig. 2

| | Results of 100,000 compilations | | | | | |
| --- | --- | --- | --- | --- | --- | --- |
| | Without outliers | | | With outliers | | |
| | Average calculated value of the correlation coefficient | Mean deviation from 0.5 | Time (s) | Average calculated value of the correlation coefficient | Mean deviation from 0.5 | Time (s) |
| Pearson's product-moment | 0.4991 | 0.0347 | 0.0001 | 0.368 | 0.1322 | 9E-05 |
| Spearman's ranking | 0.4808 | 0.0395 | 0.0003 | 0.456 | 0.0524 | 0.0003 |
| Median | 0.1664 | 0.3336 | 9E-05 | 0.1657 | 0.3343 | 1E-04 |
| MCD estimator | 0.4979 | 0.0562 | 0.0279 | 0.4984 | 0.054 | 0.0266 |
| Correlation estimating device | 0.4977 | 0.0512 | 0.0002 | 0.4798 | 0.0547 | 0.0002 |

Fig. 3

Fig. 4

Fig. 5

Europäisches
Patentamt

European
Patent Office

Office européen
des brevets

## EUROPEAN SEARCH REPORT

Application Number

EP 15 19 1429

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI Z V ET AL: "Robust estimation of a correlation coefficient for epsilon-contaminated bivariate normal distributions", AUTOMATION AND REMOTE CONTROL, vol. 67, no. 12, December 2006 (2006-12), pages 1940-1957, XP019463812, ISSN: 1608-3032, DOI: 10.1134/S0005117906120071 * section 2.3 * | 1-8 | INV. G06F17/18 |
| X | PASMAN V R ET AL: "Robust methods of estimating the correlation coefficient", AVTOMATIKA I TELEMEKHANIKA, no. 3, 1987, pages 70-80, XP055237828, * section 4 * | 1-8 | |
| X | SHEVLYAKOV G L ET AL: "Robust estimation of the correlation coefficient: an attempt of survey", AUSTRIAN JOURNAL OF STATISTICS, vol. 40, no. 1-2, 2011, pages 147-156, XP055237816, * section 2.3 * | 1-8 | |

TECHNICAL FIELDS
SEARCHED (IPC)

G06F
G06Q

The present search report has been drawn up for all claims

| Place of search | Date of completion of the search | Examiner |
|---|---|---|
| Berlin | 21 December 2015 | Domingo Vecchioni, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                                        
& : member of the same patent family, corresponding
document

EPO FORM 1503 03.82 (P04C01)

**REFERENCES CITED IN THE DESCRIPTION**

**Patent documents cited in the description**

- WO 2007064860 A